# EUROPEAN PATENT SPECIFICATION

(11) **EP 0 633 846 B1**
(45) Date of publication and mention of the grant of the patent: **10.12.1997**
(21) Application number: 93909125.2
(22) Date of filing: 13.04.1993
(51) Int. Cl.: B60S 3/04

(54) **METHOD FOR AUTOMATIC WASHING OF VEHICLES**
VERFAHREN ZUM AUTOMATISCHEN WASCHEN VON FAHRZEUGEN
PROCEDE DE LAVAGE AUTOMATIQUE DE VEHICULES

(30) Priority: 09.04.1992 SE 9201153
(43) Date of publication of application: 18.01.1995
(73) Proprietor: SAMUELSSON, Lars-Erik, S-439 30 Onsala (SE); ANDERSSON, Kenneth, 446 92 Älvängen (SE)
(72) Inventor: ANDERSSON, Kenneth, Rapenskar, S-446 92 Älvängen (SE)
(74) Representative: Lindberg, Klas Valter Bo
(86) International application number: SE9300322
(87) International publication number: WO9321045

(56) References cited:
- DE-A- 1 505 431
- DE-A- 2 512 992
- DE-C- 4 038 305
- GB-A- 1 407 894

## Description

### TECHNICAL FIELD

The present invention concerns a method for automatic washing and rinsing of vehicles, as referred to in the preamble of claim 1 and disclosed in DE-A-2 512 992.

### BACKGROUND OF THE INVENTION

Washing of passenger cars, buses and trucks is carried out in essentially two ways, i.e.manually or in automatic washing installations. The impurities which are removed from the car during the washing are flushed down the drains together with the spent detergent. In manual car-washing, detergents of cold-degreasing type usually are used. Such degreasing agents assist in dissolving oil and grease that otherwise would have remained on the vehicle. Following the treatment with the cold-degreasing agent a schampoo comprising surfactants, complexing agents and dispersing agents is used. In other words, considerable amounts of often environmentally harmful substances are emitted into the drains and end up in recipients or in the sewage disposal system. For example, engine oils often contain decomposition products that are very harmful to the environment, such as PCB (polychlorinated biphenyle) and the like.

The mode of operation of car-wash installations varies according to season. In the wintertime, a cold-degreasing agent or a pre-wash including cold-degreasing agents is almost always used. Thereafter, the car is washed with some kind of schampoo, and is rinsed. The installations are equipped with oil separators designed to separate the oil and impurities dissolved in the oil. Impurities in the liquid phase follow the drainage water into the recipients or the sewage disposal system. Strangely enough, these conditions have been accepted for quite some time, although in Sweden alone between 40,000 and 60,000 tons of degreasing products end up in the environment in some form in this way. Some attempts have been made to find environmentally more acceptable chemical products but as a rule such products are less efficient from a cleaning point of view. Washing with hot washing liquids could improve the cleaning power but would increase the energy costs to an unacceptable level, because in a conventional car-washing installation the hot washing liquid would be let out directly to the drains.

On the whole, the development within the technology of automatic car-washing installations has concentrated on increasingly advanced mechanical means in the washing devices, introduction of flushing of the bottom faces of the engine and the chassis from below, of washing of the lateral faces of the wheels clean of asbestos and dirt, and application of rinsing agents and wax to ensure that the final result will be the best possible. Increasingly efficient detergents are being developed but as a rule without considering the effects on the environment. Micro-emulsion products, for instance, are perfectly stable, infinitely dilutable and, having passed through oil filters and separators, these products have a higher content of oil rather than a lower one, and for the reasons stated their use is prohibited in many countries.

Owing to the particular road conditions in Sweden, exposing the cars being to salt and torn-off asphalt particles in the wintertime and to splashes of molten asphalt from road re-construction work in the summer, the chemicals and the washing process must fulfil very strict requirements. The molten asphalt must actually be dissolved by a solvent, and it is hardly removed by an alcaline water-based degreasing agent. It is precisely these circumstances that are likely to have spurred on the increasingly extensive use of the efficient but environmentally harmful chemicals. Following the "degreasing" step, the car is washed with a schampoo in order to remove the rest of the degreasing agent and to remove other dirt. During this procedure, the car is flushed from underneath, whereby large amounts of oil originating from the engine and the driving rope are removed. Thereafter follow the rinsing step, the application of a rinsing agent, of wax, and the drying step. Also in this case it is actually desirable to prevent the spent chemicals from being transferred to the drainage.

Against this background it is not an easy task to use chemicals that are really nature-preserving, and still give a satisfactory washing result.

In DE-A-2 512 992 is suggested a solution in a vehicle washing installation according to which used washing liquid, containing detergents and other impurities, is prevented from being discharged directly into the sewage system. Instead, it is collected in a separate vessel for repeated use until the washing power of the detergents has been entirely spent. The collection vessel is equipped with means for cleaning and returning used washing liquid to several separate treatment tanks to which fresh water is added before the contents of the tank are made use of again. Although this solution diminishes the amounts of detergents etcetera needed for the washing, it does not significantly reduce the amount of fresh water required, nor does it suggest a cyclic reuse of washing liquid in a closed system.

### PURPOSE OF THE INVENTION

The purpose of the present invention is to substantially reduce the problems outlined in the aforegoing by suggesting an automatic vehicle washing method which gives a satisfactory washing result without affecting the sewage system. The method may produce a high-concentrate sludge that may be disposed of in a simple manner.

### SUMMARY OF THE INVENTION

The above purpose is achieved in accordance with the invention by a method possessing the characteristics appearing from the appended claims.

In accordance with the invention the automatic washing of the vehicle is effected in accordance with a counter-flow principle, whereby in the early steps of the treatment the vehicle will be washed with a washing liquid that is dirtier than in subsequent washing steps, and an essential proportion of the washing liquid is reused. In addition, the vehicle is positioned in at least one treatment station where a plurality of the treatment steps are then carried out. In the first treatment step, treatment liquid is supplied from a first treatment tank and is sprayed onto the vehicle together with additives, if any, and together with impurities originating from the vehicle the liquid thus supplied flows through openings in the floor and is returned to the first treatment tank, whereby an essential proportion of the treatment liquid thus is reused. In the following treatment step, treatment liquid is supplied in an equivalent manner from a second treatment tank and is sprayed onto the vehicle together with additives, if any, and is then, after drainage, returned to the second treatment tank. The method is characterized in that this procedure is carried out in each subsequent one of the treatment steps by using in each treatment step a treatment tank which is specific for that particular treatment step and which contains liquid from the corresponding treatment step that has been sprayed onto the vehicle as well as a supplementary replenishing amount of liquid from the tank for the subsequent treatment step in compensation for liquid lost e.g. through evaporation, such that in this manner the treatment liquid sprayed onto the vehicle becomes increasingly cleaner in each treatment step, and impurities contained in a subsequent treatment tank are transferred to the tank for a preceding treatment step, such replenishment to the tank specific for that particular treatment step being effected, from the tank for the immediately subsequent treatment step, and this replenishment between tanks being effected between tanks used for rinsing and for washing immediately prior to rinsing. Each treatment step thus is carried out when the vehicle is standing still in the treatment station, and several treatment steps may be carried out in the same station.

In each treatment step the treatment liquid thus is transferred to a tank specific for that treatment step and the treatment liquid is reused. In this manner the flow of chemicals and liquid thus is contained in a closed system. Owing to this closed system the amounts of chemicals and water needed are radically reduced. Owing to the closed system no chemical-laden water is emitted to the drains. Instead, it is retained within the installation and recycled and reused therein. Obviously, this is an important advantage from an environmental point of view. The closed liquid flow system also attributes to an improvement of the washing efficiency. This is so, because as a result of the reuse of the washing chemicals the consumption thereof is reduced quite considerably, with the result that it becomes possible to use more potent chemicals without the economy suffering. In addition, the washing liquid may be heated, which increases its detergent effect. Since the heated water is returned to the same tank the energy losses becomes a great deal lower than they would have been, had the heated wash liquid been allowed to flow straight down the drains. In consequence thereof, it becomes possible to use much hotter water than in conventional car washes. The washing efficiency is increased accordingly. All in all, the conditions for achieving an excellent washing result without using brushes are improved. The use of brushes should be avoided since they may damage the car paint. Should it nonetheless be necessary to use brushes in order to achieve an acceptable result, then the higher detergent effect provided by the claimed method makes it possible to use less aggressive brushing.

The treatment steps to which the vehicle is subjected could be carried out in one or several treatment stations. When carried out in a single station, the latter normally comprises a pre-treatment step involving the use of a degreasing agent, followed by washing and rinsing steps and often a finishing waxing step. Since all steps are carried out in the same station, the capacity becomes comparatively low whereas the costs are reasonable. It may be preferred to transfer the pre-treatment step to a separate treatment station which is designed in an efficient manner to receive all the impurities that are loosened in the pre-treatment. In this way, the impurities and the degreasing agent from the pre-treatment will not interfere with the washing and rinsing steps in the subsequent treatment station. Similarly, the finishing waxing treatment could alse be carried out in a separate station.

In accordance with a further development in line with the claimed invention, liquid is carried between the washing and rinsing water tanks in such a manner as to accentuate the counter-flow effect. This means that the tank containing the liquid from the first washing step receives liquid from the tank containing the liquid for the subsequent rinsing step, and that the latter tank receives liquid from the tank containing the liquid for the second rinsing step. In this manner impurities from the tank containing the final rinsing liquid are transferred to the immediately preceding tank, and so on, so that consequently the impurities are transferred towards the preceding treatment steps. This transfer preferably is effected by means of pumps drawing liquid from the liquid surface in each individual tank. In this manner, impurities floating on the liquid surface can be transferred to the tanks corresponding to the previous treatment steps.

In accordance with yet another further development in line with the claimed invention, a filtering device is used to treat the liquid. This method is used when the liquid contained in a tank has deteriorated to a point necessitating replacement. The filtering device removes impurities and oil droplets. However, washing chemicals preferably are not removed to any significant degree, and consequently these chemicals may be recovered for reuse. Waste from the filtering device is carried to a sludge tank for subsequent destruction.

Further characteristics of the invention and advantages thereof appear from the subsequent detailed description of various embodiments.

### DESCRIPTION OF THE DRAWINGS

Fig. 1 illustrates schematically a car wash installation in accordance with the subject invention while a particular washing step is in progress. The installation comprises one single treatment station.

Fig. 2 illustrates the installation of Fig. 1 during the immediately following washing step.

Fig. 3 illustrates a car wash installation comprising three separate treatment stations. The treatment is carried out in the first treatment station and the subsequent treatment steps are indicated by the cars being drawn in dash-and-dot lines.

### DESCRIPTION OF PREFERRED EMBODIMENTS

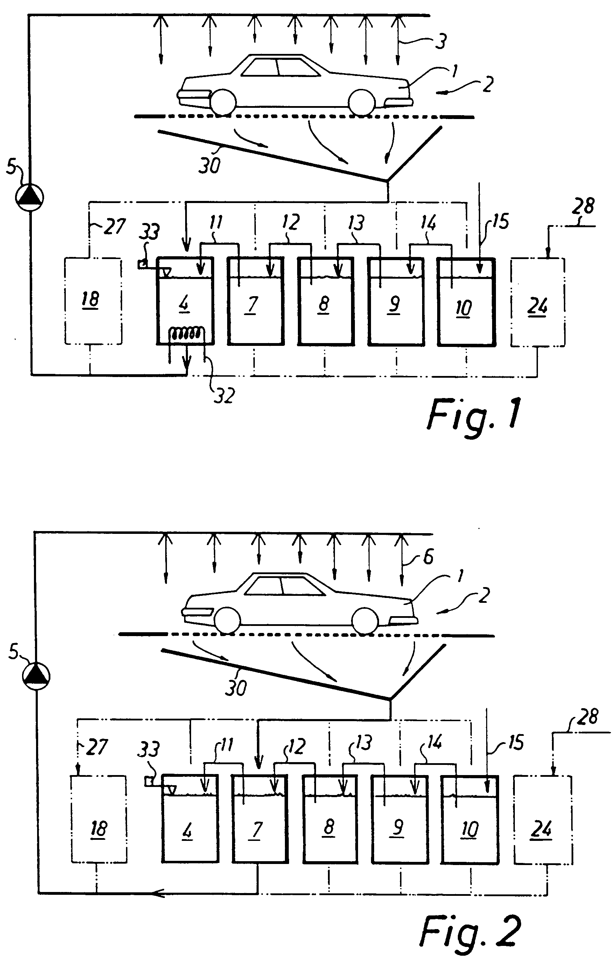

In Fig. 1, numeral reference 1 designates a vehicle placed in a treatment station in the vehicle wash installation. The vehicle stands on a perforated surface, such as a floor grating, and spray nozzles are positioned above and laterally of the vehicle in order to spray washing liquid 3 thereon. A collection pit 30 underneath the grate floor receives the washing liquid that is drained off the vehicle. From the lowest point of the collection pit 30 a system of lines leads to a number of tanks, designed 18-24, inclusive. The tanks 18 and 24 are illustrated in dash-and-dot lines since on the one hand they often are not used in the washing process and on the other they often may be positioned in separate stations preceding or following station 2. Tanks 4-10 inclusive are tanks holding washing and rinsing liquids with which car wash installations normally are equipped. The number of tanks used could, on the other hand, vary. When fewer tanks are used the water consumption required to obtain a satisfactory result is increased. The contents of the detergent in the tanks decrease by approximately a power of ten for each step. For instance, if the contents amount to e.g. 1000 units in washing tank 4 they amount to 100 in tank 7, to 10 units in tank 8, to 1 unit in tank 9, and to 0.1 units in tank 10. The boundaries between washing and rinsing therefore are not absolute ones, although for practical reasons it may be suitable to refer to all tanks 7-10 as rinsing liquid tanks. Tank 18 is a pre-treatment tank which is used in connection with degreasing agents or the like. Tank 24 contains a waxing agent to be applied for the finishing waxing treatment of the vehicle. The pre-treatment including a degreasing agent and the finishing treatment by means of wax often are optional steps of the washing programme.

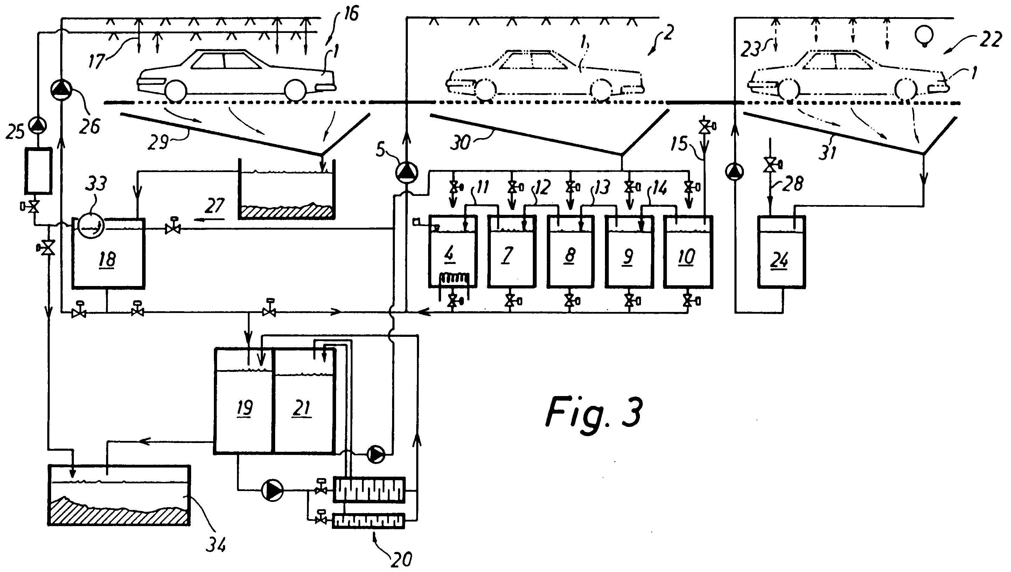

The unique feature of the washing method is, as mentioned previously, that in each washing step for cleaning the vehicle a particular tank is used. Fig. 1 illustrates how washing liquid is being pumped from tank 4 by the pump 5 and is being sprayed onto the vehicle 1. The washing liquid 3 runs down into the collection pit 30 and from there, it is carried through the system of lines back to the tank 4. In this drawing figure the sections of the system of conduits that are then used are shown in continuous lines whereas remaining conduit sections are indicated in dash-and-dot lines. In order to direct the flow of liquid to the intended one of the tanks electrically controlled valves, for instance, could be used, as appears from Fig. 3. These valves are placed at the inlets and outlets of the tanks. In the example under discussion, the valves above and below tank 4 thus are open, allowing the pump 5 to spray washing liquid from tank 4 onto the car, whereafter this liquid is returned to tank 4. In the shown example tank 4 is provided with a heating element 32, allowing the washing liquid 3 to be heated, which increases the cleaning efficiency. The heated liquid is then again processed inside the same tank. Obviously some losses occur due to evaporation, etcetera. But the major portion of the heated washing liquid 3 thus may be reused thanks to the system described. In this manner the energy consumption is radically reduced. In consequence, considerably higher-temperature water may be used than in a conventional car wash, in which the washing liquid is not reused. The tank 4 is provided with a level sensor 33. To the tank 4 also leads a supply line 11 leading from the neighbouring tank 7, the latter containing the liquid for the subsequent car treatment step. In turn, tank 7 has a supply line 12 leading from the tank 8 containing the liquid for the next step thereafter, and so on. Finally, tank 9 containing the liquid for the second last rinsing step has a filler line 14 leading thereto from the tank 10 containing the liquid for the last rinsing step. A supply line 15 replenishes the tank 4 with essentially clean water.

Fig. 2 illustrates the next car treatment step. In this step the pump 5 sprays washing liquid 6 over the car, which liquid runs into the pit 30 and into the system of lines by way of which it is returned to the tank 7. At the start of this treatment step the vehicle is cleaner than in the preceding one, and consequently less impurities will be entrained back to the tank 7. As a result, the liquid inside tank 7 is cleaner than the liquid in tank 4. The same is true as regards the steps thereafter, so that the liquid gradually becomes cleaner upon each step. In the normal case, according to which the car is washed without being pre-treated with a degreasing agent and without receiving a finishing wax treatment, tanks 4-10, inclusive, are used. A detergent of a suitable type is supplied to the tank 4 or to the line during the first washing step during which washing liquid 3 is sprayed onto the vehicle. Heating of the washing liquid increases the efficiency. Thereafter normally follows a first rinse with liquid from tank 7, see Fig. 2. No detergent is added in this step, but water 6, containing some impurities, is sprayed onto the vehicle. This step is followed by further rinsing steps with liquid from tanks 8 and 9 in the same manner. The last rinsing step with liquid from tank 10 is the final rinse. Since tank 10 is replenished with clean water from line 15 the final rinse is carried out with substantially clean water in order to give optimum results. The washing thus is always carried out in accordance with a counter-flow principle according to which each washing step is associated with its individual tank. The cleaner the vehicle becomes, the cleaner the washing liquid used, and in the final rinsing step clean water is always used.

The flows of liquid between the various tanks with the aid of lines 11-14, inclusive, are arranged to ensure that the impurities are carried away from the tanks associated with subsequent treatment steps towards the tanks associated with the previous ones. In this manner the liquid contained in the later-step tanks becomes cleaner than it would otherwise have been. In this manner the principle of counter-current washing is reinforced. The basic principle is that the cleaner the vehicle becomes, the cleaner also the treatment liquid becomes. Water and additives are reused in essentially closed systems wherein normally only losses due to evaporation, etcetera need to be replaced. The control of the flows in the lines 11 - 15, inclusive, could of course be effected in many different ways. In accordance with one solution pneumatically operated pumps of a kind known as "mammoth" pumps incorporating overflow means, are used. They prevent the level inside the tank from which they draw liquid from rising above a certain position. In other words, line 11 restricts the level inside tank 7, line 12 the level inside 8, line 13 the level inside tank 9 and line 14 the level inside tank 10. When the pressure sensor 33 inside tank 4 detects a too-low level condition, the flow in line 15 is opened towards the tank 10. With the aid of the lines 11-14, inclusive, the same amount of liquid that is supplied to the tank 10 then will be transferred to tank 4, provided that the system was balanced in the starting position. In this manner tank 10 is supplied with clean water whereas the rest of the tanks gradually receive increasingly dirty water. The pump lines 11-14, inclusive, are designed to draw liquid close to the liquid surface in each individual tank. In this manner impurities floating on or adjacent the surface will be transferred to the next (preceding) tank. These impurities may be e.g. oil products or detergents. In the rinsing steps, detergents are regarded as impurities. In the cases when a waxing step is carried out in treatment station 2 no line is used from the waxing tank 24 to tank 10. The reason therefor is that waxing agents from the waxing step would interfere with the final rinse with liquid from tank 10. In the cases when station 2 includes a pre-treatment tank 18 no line for transfer of liquid from tank 4 to tank 18 is, as a rule, used, since detergents from the liquid in tank 4 could negatively affect the degreasing carried out in the pre-treatment stage. For instance, the detergent could have an emulsifying effect on the petroleum fraction of the degreasing agent and it is important that the latter floats on the liquid surface in order to allow it to be separated easily. An adaptation of the detergents and the degreasing agents could, however, perhaps solve this problem.

By way of the lines 11-14, inclusive, the washing and rinsing tanks 4-10, inclusive, normally are closely related. For this reason it may be natural to design them as one single large tank with dividing bulkheads, instead of the schematical divisional design illustrated in the drawing figure. The single-unit tank may also have the collection pit 30 and the perforated floor integrated therewith. In this manner it becomes possible to create a self-contained treatment-station unit which contains all the necessary components of the treatment station. For example, the collection pit and the interconnected tanks could have common side walls supporting the perforated floor, and thus the vehicle 1. The unit may be designed with a moderate height, allowing it to be placed inside many of already existing car-wash installations, rendering the latter environmentally acceptable. The transfer of liquid from one tank to the other could be solved by arranged them stepwise, whereby minor "waterfalls" will be created at each step. In this manner, no pump would be needed. The weir member between two tanks could be slightly V-shaped in order to dampen the over-flow process. The problem of transfer of liquid from the collection pit 30 to any of tanks 4-10 could also be solved with the aid of a mobile line. In this case, the line may be elastically or telescopically extendible, and consequently all valves, or all valves except one, could be eliminated. The reason for the latter alternative is that it might be desirable that the mobile line is fitted with a valve. Such a mobile line which is shifted laterally from one tank to the next thus means that many valves, usually electrically controlled, may be eliminated. In addition, this principle could be utilized also in the case of the outlet lines from the various tanks. In this case, these lines are replaced by a line which is submerged into the respective one of the tanks and is connected to the pump 5. In this manner also the outlet valves, positioned underneath the tanks, could be excluded. In adddition to the cost savings that such an arrangement would involve it would also increase the operational reliability since in total several, usually electrically controlled valves, may be eliminated. In practical terms the solution could involve an articulated suspension arrangement for the suction pipe which is connected to the pump 5. As the pipe is displaced laterally it will climb over a side wall of the tank and be pivoted into the tank, provided that its length is carefully adjusted.

Figs. 1 and 2 illustrate schematically the treatment station 2 which ordinarily is used only to wash and rinse the vehicle. Fig. 3 illustrates in closer detail a complete car wash installation including three treatment stations 16, 2 and 22. Station 16 is a pre-treatment station wherein a degreasing step and a pre-washing step associated therewith are carried out. Station 2 is a car washing and rinsing station and station 22 a car waxing station. In the drawing figure the vehicle is shown when being treated in station 16. From there, the vehicle is driven to the next station, or is conveyed to that station automatically, and finally it is driven or conveyed to the last treatment station 22. One advantage of using several treatment stations is that the capacity increases, since several cars may be treated simultaneously. At the same time the costs of the installation are increased, however. From a capacity point of view it is important that the duration of the treatment is approximately equal in all stations. This means that from a capacity point of view it may for instance by advisable to transfer one or two rinsing steps and the tanks 9 and 10 associated therewith to the waxing station 22. In an equivalent manner it would be possible to transfer the first washing step to station 2 and possibly a rinsing step to the pre-treatment station 16. However, a decisive factor in the allocation of the various functions to the various treatment stations also is the interaction of the impurities and the chemicals from one step to the next. Some mixing between the steps does occur on account of the liquid remaining in the respective one of collection pits 29-31.

In the pre-treatment step 16 a degreasing medium is sprayed onto the vehicle from a tank 25. A pump 26 pumps washing liquid from the pre-treatment tank 18 and sprays it onto the vehicle. The washing liquid is used for rinsing purposes and normally it does not contain any additives but obviously it do so. The supplied liquids run down into the collection pit 29 and are carried to a first tank 27, which serves as a sand trap, wherein gravel and other heavy particles thus settle on the bottom of the tank whereas a line leads from the upper part of the tank to the pre-treatment tank 18. In the latter a surface-suction device or skimmer 33 draws liquid from the surface. The degreasing agent, which usually is a petroleum fraction, is lighter than water and therefore collects on the surface of the liquid contained in tank 18. From the skimmer 33, the degreasing agent usually is returned to the tank 25 but it could also be carried to the sludge tank 34. The latter procedure is adopted as the need arises, i.e. when for various reasons it is advisable to replace the degreasing agent. As already mentioned application of the degreasing agent following by rinsing could be repeated several time, depending on how dirty the vehicle is. In pre-treatment station 16 the degreasing agent thus is reused as is also the washing or rinsing liquid 17. This means that the chemicals are used in a closed system and consequently more potent chemicals may be used than in washing installations wherein the chemicals are emitted in untreated condition to the drains, to a recipient or to the Sewage disposal system. The closed-loop flow of the chemicals thus gives a definite environmental advantage but also a possibility to use more potent chemicals with consequential improved washing results. Also in the subsequent treatment stations 2 and 22 the flow of chemicals is carried out in a closed system and thus the advantages outlined above apply to the entire installation. As regards the treatment in station 2 the information referred to in connection with Figures 1 and 2 applies.

Treatment station 22 is intended for the waxing and the drying treatments of the vehicle. The waxing liquid 23 is carried from the waxing-liquid tank 24 and is sprayed onto the vehicle. The liquid thereafter runs into the collection pit 31 and from there it is returned by way of a line to the waxing-liquid tank 24, thus creating a closed-loop flow. Liquid losses occurring during the waxing treatment are replaced by supply, through line 28, of essentially clean water to which a waxing agent has been added.

The division of the washing installation into three treatment stations 16, 2 and 22 as shown is particularly useful to ensure that the chemicals are not mixed in an undesirable manner. For instance, the waxing agent liquid 23 has its own collection pit 31 and its own lines. In this way it cannot interfere with the results from the final rinsing with liquid from tank 10 of the previous treatment station. In the same manner detergents contained in tank 4 cannot cause emulsifying problems in the pretreatment liquid tank 18. Furthermore, a major proportion of the dirt removed from the car is separated already in the first treatment station 16 in which, as mentioned, a particular sand trap is used.

As already mentioned, the closed-loop flows make it possible to use more potent chemicals than may be used in conventional car washes. This means that the washing system in accordance with the invention increases the chances of a satisfactory washing result without the use of brushes. The use of rotating brushes often are the cause of scratches on the finishing paint of the car and for this reason utilization thereof is under dispute. At the same time there is a feeling within this technological field that the use of brushes may be necessary in order to remove certain types of thin film and dirt on the car. In any case, the method in accordance with the invention makes it possible to use softer-acting brushes than could be done in conventional car-washes.

The capacity of the washing installation is, as mentioned, dependent on the number of treatment stations it contains. When three treatment stations are used the capacity of the installation will be very high but comparatively large-area premises are required and the costs thereof are comparatively high. To shorten the duration of the treatment in each step an obvious method is to endeavour to speed up the flow of liquid to each individual tank. This could be effected by using e.g. scraper means positioned so as to effect their scraping action along the bottom of the pit and towards the outlet therein. When the liquid reaches the conduit system pressurized air may be blown thereinto for quicker evacuation of the lines. By making use of this technique the capacity of the system thus is increased but it likewise becomes possible in this manner to reduce the intermingling of liquids from the various washing steps. This means that less liquid remains inside pits and lines when the next treatment step is initiated and new liquid is admitted. In this way the possibilities for using one single treatment station instead of two or even three are increased, as also for using two treatment stations instead of three, which could provide substantial economical gains.

A separating or filtering device 20 and associated tanks 19, 21 and 34 could also be coupled to the system. From tanks 18, 4, 7-10 inclusive, liquid may be transferred to a collection tank 19 when a cleaning need exists. The transfer may be effected when the liquid in any particular tank becomes too laden with impurities. From the collection tank liquid is then pumped through the filtering device 20. The latter could e.g be in the form of a centrifugal device for separation of coarser fractions and a filter for separation of primarily impurities and oil. The filter may operate in accordance with the membrane filtering technique. If a filter of micro-filter type is used large oil drops and impurities may be separated whereas most of the washing chemicals, for example tensides, pass through the filter. This is desirable in order to reduce the consumption of chemicals. If instead the ultra-filtering technique is used, essentially all oil is separated together with a majority of the washing chemicals. The choice of the chemicals and the proportional use thereof as regards purity and consumption is made in connection with the choice of the filter. The drawing figure shows a micro-filter and a salt filter coupled in parallel. Cleaned liquid is transferred to a clean-water tank 21. The degree of purity depends on the actual cleaning capacity of the filter. From the clean-water tank 21 lines lead to the tanks 4, 7-10. These lines are partially integrated with the lines leading from the collection pit 30 and to various tanks. In addition, one line 27 leads to the tank 18 containing pre-treatment liquid. With the aid of a pump and valves inserted in the lines water from the clean-water tank thus could be carried to the selected tank. The material which is separated in the filtering device 20 is returned to the collection pit 19. From the lower part of the latter a line leads to a sludge tank 34, allowing sludge and impurities to be transferred to that tank for subsequent processing.

Within the scope of the present invention several modifications naturally are possible. For example, a number of tanks may be placed above the vehicle and the liquid instead be pumped up to the associated tanks and flow therefrom by gravity. Part of the installation, such as the treatment stations 2 and 22, could be integrated with one another into a container-like unit which could be joined to an already existing car wash which in this case contains e.g. pre-treatment station 16.

## Claims

1. A method for automatic washing and rinsing of vehicles (1), such as passenger cars, busses, trucks, trains, and the like, wherein recirculation and reuse of a substantial proportion of the washing liquid takes place during the washing procedure proper and wherein a principle of counter-flow is used, whereby the vehicle (1) will be washed in a dirtier washing liquid during early treatment stages than in later ones, the vehicle being positioned in at least one treatment station (2, 16, 22), for example by either being driven or transported there, in which station(s) several treatment steps are carried out, during which in the first treatment step treatment liquid (3, 17) is supplied from a first treatment tank (18, 4) and is sprayed onto the vehicle together with additives, if any, and together with impurities originating from the vehicle the liquid thus supplied flows through openings in the floor and is returned to the first treatment tank (18, 4), thus causing reuse of a substantial proportion of the treatment liquid, and in the subsequent treatment step the treatment liquid (3, 6) is carried in the same manner from a second treatment tank (4, 7) and is sprayed onto the vehicle together with additives, if any, and is then, after drainage, returned to the second treatment tank (4, 7), **characterized** in that this procedure is carried out in each subsequent one of the treatment steps by using in each treatment step a treatment tank (18, 4, 7, 8, 9, 10, 24) which is specific for that particular treatment step and which contains liquid from the corresponding treatment step that has been sprayed onto the vehicle as well as a supplementary replenishing amount (11-15, 27, 28) of liquid from the tank for the subsequent treatment step in compensation for liquid lost e.g. through evaporation, such that in this manner the treatment liquid sprayed onto the vehicle becomes increasingly cleaner in each treatment step, and impurities contained in a subsequent treatment tank are transferred to the tank for a preceding treatment step, such replenishment to the tank specific for that particular treatment step being effected, from the tank for the immediately subsequent treatment step, and this replenishment between tanks being effected between tanks used for rinsing and for washing immediately prior to rinsing.

2. A method as claimed in claim 1, **characterized** in that the vehicle is placed in a treatment station (2) where a plurality of treatment steps are carried out, in that in at least the first one of said steps washing liquid (3), which preferably is heated, is carried from a first washing-liquid tank (4) and is sprayed onto the vehicle together with additives, if any, and the washing liquid thus supplied is returned to the first washing-liquid tank (4), which step is followed by at least one rinsing step using the associated rinsing-liquid tanks (7-10), essentially clean water being used in the last rinsing step, and followed, optionally, by at least one treatment step using an associated tank (24), in which step waxing liquid (23) from a waxing-liquid tank (24) is sprayed onto the vehicle.

3. A method as claimed in claim 1, **characterized** in that the first treatment step in station (2) comprises spraying onto the vehicle, for instance from a tank (25), a degreasing agent containing a petroleum fraction, and also spraying washing liquid onto the vehicle, from a pre-treatment tank (18), and optionally repeating this procedure at least once, followed by at least one treatment step using the associated tank (4), in which step the vehicle is treated with a washing liquid containing a suitable detergent, followed by at least one treatment step using the associated tank (7-10), in which step the vehicle is rinsed with water which is substantialy free of additives, optionally followed by at least one treatment step using the associated tank (24), wherein waxing liquid (23) from a waxing-liquid tank (24) is sprayed onto the vehicle.

4. A method as claimed in claim 1 or 3, **characterized** in that at least the first vehicle treatment step is carried out in a separate pre-treatment station (16) wherein the vehicle is treated before it reaches the treatment station (2).

5. A method as claimed in any one of claims 1, 3 or 4, **characterized** in that at least the last vehicle treatment step step is carried out in a separate wax-treatment station (22), in which step waxing liquid (23) is pumped from a waxing-liquid tank (24) and is sprayed onto the vehicle together with additives, if any, and the waxing liquid (23) thus supplied is made to flow through openings in the floor back to the waxing-liquid tank (24), thus causing reuse of a substantial proportion of the waxing liquid.

6. A method as claimed in any one of the preceding claims, **characterized** in that washing liquid (11) from the washing-liquid tank (7) associated with the usually third vehicle treatment step is transferred to the tank (4) associated with the second treatment step, and from the tank (8) associated with the fourth treatment step washing liquid (12) is transferred to the tank (7) associated with the previous, i.e. the third treatment step, and so on, so that from the tank (10) associated with the second last treatment step washing liquid (14) is transferred to the tank (9), and the tank (10) associated with the second last treatment step is supplied from the exterior with essentially clean washing liquid (15), so that consequently impurities are transferred in the direction towards the tank (4) associated with the second treatment step and the transfer of washing liquid thus attributes to making the washing liquid cleaner upon each treatment step.

7. A method as claimed in any one of the preceding claims, **characterized** in that when a need for purification arises washing liquid is transferred from at least one washing-liquid tank (18, 4, 7, 8, 9, 10) to a filtering device (20), for example by way of a working tank (19), from which filtering device the cleaned washing liquid is returned, for instance by way of a clean-water tank (21), to at least one washing-liquid tank (18, 4, 7, 8, 9, 10).

8. A method as claimed in any one of the preceding claims, **characterized** in that pressurized air is used to blow clean the lines leading from at least one of the collection pits (29, 30, 31) that are positioned in the treatment station (16, 2, 22) to the treatment tank in question (18, 4, 7, 8, 9, 10, 24) in order to shorten the duration of treatment in that treatment station.

9. A method as claimed in any one of the preceding claims, **characterized** in that at least one of the collection pits (29, 30, 31) is provided with a scraper mechanism effecting a scraping action downwards, along at least one bottom face of the pit in order to shorten the duration of treatment in the associated treatment station.

10. A method as claimed in any one of the preceding claims, **characterized** in that as the need arises liquid is transferred from at least one treatment tank (18, 4, 7, 8, 9, 10), for instance by way of a collection tank (19), to a separation device (20) for cleaning, said separation device being e.g. a centrifugal device and/or a membrane type of filter, whereupon the cleaned liquid is supplied to at least one treatment tank (18, 4, 7, 8, 9, 10), for instance by way of a clean-water tank (21).

11. A method as claimed in claim 10, **characterized** in that impurities and oil droplets are separated from the washing liquid but that the detergents essentially are not but may be reused.

## Patentansprüche

1. Verfahren zum automatischen Waschen und Abspülen von Fahrzeugen (1) wie Personenkraftwagen, Bussen, Lastwagen, Zügen und dergleichen, bei dem man einen wesentlichen Teil der Waschflüssigkeit während des eigentlichen Waschvorgangs zurückführt und wiederverwendet und bei dem man nach einem Gegenstromprinzip verfährt, wodurch das Fahrzeug (1) in frühen Behandlungsstufen mit einer schmutzigeren Waschflüssigkeit gewaschen wird als in späteren, wobei das Fahrzeug in mindestens eine Behandlungsstation (2, 16, 22) eingebracht wird, beispielsweise entweder durch Hineinfahren oder durch Transport dorthin, in der bzw. denen verschiedene Behandlungsschritte durchgeführt werden, wobei im ersten Behandlungsschritt aus einem ersten Behandlungstank (18, 4) Behandlungsflüssigkeit (3, 17) zugeführt und gegebenenfalls zusammen mit Additiven auf das Fahrzeug gesprüht wird und die so zugeführte Flüssigkeit zusammen mit vom Fahrzeug stammenden Fremdstoffen durch Bodenöffnungen abfließt und zum ersten Behandlungstank (18, 4) zurückgeführt wird, wodurch eine Wiederverwendung eines wesentlichen Teils der Behandlungsflüssigkeit bewirkt wird, und im nachfolgenden Behandlungsschritt die Behandlungsflüssigkeit (3, 6) auf die gleiche Art und Weise aus einem zweiten Behandlungstank (4, 7) zugeführt und gegebenenfalls zusammen mit Additiven auf das Fahrzeug gesprüht wird und nach dem Abfließen zum zweiten Behandlungstank (4, 7) zurückgeführt wird, dadurch gekennzeichnet, daß man bei jedem nachfolgenden Behandlungsschritt genauso vorgeht, indem man bei jedem Behandlungsschritt einen dem betreffenden Behandlungsschritt zugeordneten Behandlungstank (18, 4, 7, 8, 9, 10, 24) verwendet, der Flüssigkeit aus dem entsprechenden Behandlungsschritt, die auf das Fahrzeug gesprüht wurde, sowie als Ausgleich für z.B. durch Verdampfung verlorengegangene Flüssigkeit eine ergänzende Nachfüllmenge (11-15, 27, 28) der Flüssigkeit aus dem Tank für den nachfolgenden Behandlungsschritt enthält, so daS die auf das Fahrzeug gesprühte Behandlungsflüssigkeit damit bei jedem Behandlungsschritt immer reiner wird und in einem nachfolgenden Behandlungstank enthaltene Fremdstoffe in den Tank für einen vorhergehenden Behandlungsschritt überführt werden, wobei eine derartige Nachfüllung des dem betreffenden Behandlungsschritt zugeordneten Tanks aus dem Tank für den unmittelbar nachfolgenden Behandlungsschritt erfolgt und diese Nachfüllung zwischen Tanks zwischen einem, der zum Abspülen und einem, der zum unmittelbar vor dem Abspülen stattfindenden Waschen benutzt wird, erfolgt.

2. Verfahren nach Anspruch 1, dadurch gekennzeichnet, daß man das Fahrzeug in eine Behandlungsstation (2) einbringt, in der insofern mehrere Behandlungsschritte durchgeführt werden, als in mindestens dem ersten der Schritte vorzugsweise erwärmte Waschflüssigkeit (3) aus einem ersten Waschflüssigkeitstank (4) zugeführt und gegebenenfalls zusammen mit Additiven auf das Fahrzeug gesprüht wird und die so zugeführte Waschflüssigkeit zum ersten Waschflüssigkeitstank (4) zurückgeführt wird, wonach mindestens ein Abspülschritt unter Verwendung der zugehörigen Abspülflüssigkeitstanks (7-10) erfolgt, wobei im letzten Abspülschritt weitgehend reines Wasser verwendet wird, wonach gegebenenfalls mindestens ein Behandlungsschritt unter Verwendung eines zugehörigen Tanks (24) erfolgt, bei dem Wachsflüssigkeit (23) aus einem Wachsflüssigkeitstank (24) auf das Fahrzeug gesprüht wird.

3. Verfahren nach Anspruch 1, dadurch gekennzeichnet, daß man im ersten Behandlungsschritt in Station (2) beispielsweise aus einem Tank (25) ein eine Erdölfraktion enthaltendes Entfettungsmittel auf das Fahrzeug sprüht und auch Waschflüssigkeit aus einem Vorbehandlungstank (18) auf das Fahrzeug sprüht und gegebenenfalls diesen Vorgang mindestens einmal wiederholt, wonach mindestens ein Behandlungsschritt unter Verwendung des zugehörigen Tanks (4) erfolgt, bei dem das Fahrzeug mit einer ein geeignetes Detergens enthaltenden Waschflüssigkeit behandelt wird, wonach mindestens ein Behandlungsschritt unter Verwendung des zugehörigen Tanks (7-10) erfolgt, bei dem das Fahrzeug mit weitgehend additivfreiem Wasser abgespült wird, wonach gegebenenfalls mindestens ein Behandlungsschritt unter Verwendung des zugehörigen Tanks (24) erfolgt, bei dem Wachsflüssigkeit (23) aus einem Wachsflüssigkeitstank (24) auf das Fahrzeug gesprüht wird.

4. Verfahren nach Anspruch 1 oder 3, dadurch gekennzeichnet, daß man mindestens den ersten Fahrzeugbehandlungsschritt in einer separaten Vorbehandlungsstation (16) durchführt, in der man das Fahrzeug vor Erreichen der Behandlungsstation (2) behandelt.

5. Verfahren nach einem der Ansprüche 1, 3 oder 4, dadurch gekennzeichnet, daß man mindestens den letzten Fahrzeugbehandlungsschritt in einer separaten Wachsbehandlungsstation (22) durchführt, wobei man Wachsflüssigkeit (23) aus einem Wachsflüssigkeitstank (24) pumpt und gegebenenfalls zusammen mit Additiven auf das Fahrzeug sprüht und die so zugeführte Wachsflüssigkeit (23) durch Öffnungen im Boden zum Wachsflüssigkeitstank (24) zurückleitet, wodurch ein wesentlicher Teil der Wachsflüssigkeit wiederverwendet werden kann.

6. Verfahren nach einem der vorhergehenden Ansprüche, dadurch gekennzeichnet, daß man aus dem üblicherweise dem dritten Fahrzeugbehandlungsschritt zugehörigen Waschflüssigkeitstank (7) Waschflüssigkeit (11) in den dem zweiten Behandlungsschritt zugehörigen Tank (4) überführt, und aus dem dem vierten Behandlungsschritt zugehörigen Tank (8) Waschflüssigkeit (12) in den dem vorhergehenden, d.h. dritten Behandlungsschritt zugehörigen Tank (7) überführt usw., so daß aus dem dem vorletzten Behandlungsschritt zugehörigen Tank (10) Waschflüssigkeit (14) in den Tank (9) überführt wird und dem dem vorletzten Behandlungsschritt zugehörigen Tank (10) von außen weitgehend reine Waschflüssigkeit (15) zugeführt wird, so daß Fremdstoffe folglich in Richtung des dem zweiten Behandlungsschritt zugehörigen Tanks (4) überführt werden und die Waschflüssigkeitsüberführung somit dazu beiträgt, die Waschflüssigkeit bei jedem Behandlungsschritt reiner zu machen.

7. Verfahren nach einem der vorhergehenden Ansprüche, dadurch gekennzeichnet, daß man für den Fall, daß Reinigungsbedarf auftritt, die Waschflüssigkeit von mindestens einem Waschflüssigkeitstank (18, 4, 7, 8, 9, 10), beispielsweise mittels eines Arbeitstanks (19), einer Filtriereinrichtung (20) zuführt, von der man die gereinigte Waschflüssigkeit, beispielsweise mittels eines Reinwassertanks (21), zu mindestens einem Waschflüssigkeitstank (18, 4, 7, 8, 9, 10) zurückführt.

8. Verfahren nach einem der vorhergehenden Ansprüche, dadurch gekennzeichnet, daß man zum Ausblasen der von mindestens einem der Sammelbecken (29, 30, 31), die in der Behandlungsstation (16, 2, 22) angeordnet sind, zu dem entsprechenden Behandlungstank (18, 4, 7, 8, 9, 10, 24) führenden Leitungen zur Verkürzung der Behandlungsdauer in dieser Behandlungsstation Druckluft verwendet.

9. Verfahren nach einem der vorhergehenden Ansprüche, dadurch gekennzeichnet, daß mindestens eines der Sammelbecken (29, 30, 31) zur Verkürzung der Behandlungsdauer in der zugehörigen Behandlungsstation mit einem an mindestens einer Bodenfläche des Beckens entlang in Abwärtsrichtung schabenden Schabermechanismus versehen ist.

10. Verfahren nach einem der vorhergehenden Ansprüche, dadurch gekennzeichnet, daß man bei Bedarf Flüssigkeit aus mindestens einem Behandlungstank (18, 4, 7, 8, 9, 10), beispielsweise mittels eines Sammeltanks (19), zu einer Trenneinrichtung (20) zum Reinigen überführt, bei der es sich z.B. um eine Zentrifuge und/oder einen Filter vom Membrantyp handeln kann, wonach man die gereinigte Flüssigkeit mindestens einem Behandlungstank (18, 4, 7, 8, 9, 10), beispielsweise mittels eines Reinwassertanks (21), zuführt.

11. Verfahren nach Anspruch 10, dadurch gekennzeichnet, daß man Fremdstoffe und Öltröpfchen von der Waschflüssigkeit abtrennt, aber die Detergenzien im wesentlichen nicht abtrennt, aber wiederverwenden kann.

## Revendications

1. Procédé pour le lavage et le rinçage automatiques de véhicules (1) tels que des véhicules de tourisme, des bus, des camions, des trains et analogues, dans lequel la remise en circulation et la réutilisation d'une proportion importante du liquide de lavage ont lieu au cours du procédé de lavage proprement dit, et dans lequel on utilise un principe à contre-courant, dans lequel le véhicule (1) sera lavé dans un liquide de lavage au cours des étapes de traitement initiales, plus sale que celui utilisé dans des étapes ultérieures, le véhicule étant positionné dans au moins un poste de traitement (2, 16, 22) par exemple en y étant, soit conduit, soit transporté, postes dans lesquels on met en oeuvre plusieurs étapes de traitement au cours desquelles, dans la première étape de traitement, on alimente un liquide de traitement (3, 17) à partir d'un premier réservoir de traitement (18, 4) et on le pulvérise sur le véhicule conjointement avec des additifs, si tant est qu'on en utilise, et le liquide ainsi alimenté s'écoule, conjointement avec les impuretés provenant du véhicule, à travers des ouvertures pratiquées dans le sol et est renvoyé au premier réservoir de traitement (18, 4), donnant lieu à la réutilisation d'une proportion importante du liquide de traitement, et dans l'étape de traitement ultérieure, le liquide de traitement (3, 6) est transporté de la même manière à partir d'un second réservoir de traitement (4, 7) et est pulvérisé sur le véhicule conjointement avec des additifs, si tant est qu'on en utilise, et est ensuite, après drainage, renvoyé au second réservoir de traitement (4, 7), caractérisé en ce qu'on effectue ce procédé dans chacune des étapes successives de traitement en utilisant, dans chaque étape de traitement, un réservoir de traitement (18, 4, 7, 8, 9, 10, 24) qui est spécifique pour cette étape de traitement particulière et qui contient du liquide provenant de l'étape de traitement correspondante, qui a été pulvérisé sur le véhicule, ainsi qu'une quantité de régénération supplémentaire (11-15, 27, 28) de liquide provenant du réservoir destiné à l'étape de traitement ultérieure qui compense la perte de liquide, par exemple par évaporation, de telle sorte que, de cette manière, le liquide de traitement pulvérisé sur le véhicule manifeste une propreté croissante à chaque étape de traitement et de telle sorte que les impuretés contenues dans un réservoir de traitement ultérieur sont transférées au réservoir destiné à une étape de traitement précédente, la régénération de ce type au réservoir spécifique pour cette étape de traitement particulière étant réalisée à partir du réservoir destiné à l'étape de traitement immédiatement suivante et cette régénération entre les réservoirs étant réalisée entre des réservoirs utilisés pour le rinçage et pour le lavage précédant immédiatement le rinçage.

2. Procédé selon la revendication 1, caractérisé en ce que le véhicule est placé dans un poste de traitement (2) dans lequel on effectue plusieurs étapes de traitement, en ce que, dans au moins la première desdites étapes, un liquide de lavage (3) qui est de préférence chauffé est transporté depuis un premier réservoir de liquide de lavage (4) et est pulvérisé sur le véhicule conjointement avec des additifs, si tant est qu'on en utilise, et le liquide de lavage ainsi alimenté est renvoyé au premier réservoir de liquide de lavage (4), ladite étape étant suivie par au moins une étape de rinçage utilisant les réservoirs de liquide de rinçage (7-10) qui lui sont associés, de l'eau essentiellement propre étant utilisée dans la dernière étape de rinçage et ladite étape étant suivie, le cas échéant, d'au moins une étape de traitement utilisant un réservoir (24) qui lui est associé, étape dans laquelle une cire liquide (23) provenant d'un réservoir de cire liquide (24) est pulvérisée sur le véhicule.

3. Procédé selon la revendication 1, caractérisé en ce que la première étape de traitement au poste (2) comprend la pulvérisation sur le véhicule, par exemple à partir d'un réservoir (25), d'un agent de dégraissage contenant une fraction de pétrole, et la pulvérisation d'un liquide de lavage sur le véhicule à partir d'un réservoir de prétraitement (18), ainsi que la répétition facultative de ce procédé au moins une fois, suivie par au moins une étape de traitement utilisant le réservoir (4) qui lui est associé, étape dans laquelle le véhicule est traité avec un liquide de lavage contenant un détergent approprié, cette étape étant suivie d'au moins une étape de traitement utilisant le réservoir (7-10) qui lui est associé, étape dans laquelle le véhicule est rincé avec de l'eau qui est essentiellement exempte d'additifs, cette étape étant éventuellement suivie d'au moins une étape de traitement utilisant le réservoir (24) qui lui est associé, dans laquelle on pulvérise sur le véhicule une cire liquide (23) à partir d'un réservoir de cire liquide (24).

4. Procédé selon la revendication 1 ou 3, caractérisé en ce qu'on effectue au moins la première étape de traitement du véhicule dans un poste de prétraitement séparé (16) dans lequel le véhicule est traité avant d'atteindre le poste de traitement (2).

5. Procédé selon l'une quelconque des revendications 1, 3 ou 4, caractérisé en ce qu'on effectue au moins la dernière étape de traitement du véhicule dans un poste séparé (22) de traitement a la cire, étape dans laquelle on pompe de la cire liquide (23) à partir d'un réservoir de cire liquide (24) et on la pulvérise sur le véhicule conjointement avec des additifs, si tant est qu'on en utilise, et la cire liquide (23) ainsi alimentée s'écoule en retour à travers des ouvertures pratiquées dans le sol en direction du réservoir de cire liquide (24), donnant lieu à la réutilisation d'une proportion importante de la cire liquide.

6. Procédé selon l'une quelconque des revendications précédentes, caractérisé en ce que le liquide de lavage (11) provenant du réservoir de liquide de lavage (7) associé habituellement à la troisième étape de traitement du véhicule est transféré au réservoir (4) associé à la deuxième étape de traitement et le liquide de lavage (12) provenant du réservoir (8) associé à la quatrième étape de traitement est transféré au réservoir (7) associé à l'étape de traitement antérieure, c'est-à-dire la troisième étape de traitement, et ainsi de suite, de telle sorte que le liquide de lavage (14) provenant du réservoir (10) associé à l'avant-dernière étape de traitement est transféré au réservoir (9) et le réservoir (10) associé à l'avantdernière étape de traitement est alimenté de l'extérieur avec du liquide de lavage (15) essentiellement propre, si bien que, par la suite, les impuretés sont transférées en direction du réservoir (4) associé à la seconde étape de traitement et le transfert du liquide de lavage a ainsi pour fonction de rendre plus propre le liquide de lavage à chaque étape de traitement.

7. Procédé selon l'une quelconque des revendications précédentes, caractérisé en ce que, lorsqu'un besoin de purification surgit, du liquide de lavage est transféré à partir d'au moins un réservoir de liquide de lavage (18, 4, 7, 8, 9, 10) à un dispositif de filtrage (20) par exemple au moyen d'un réservoir de travail (19), le liquide de lavage purifié étant renvoyé à partir du dispositif de filtrage, par exemple au moyen d'un réservoir d'eau propre (21), à au moins un réservoir de liquide de lavage (18, 4, 7, 8, 9, 10).

8. Procédé selon l'une quelconque des revendications précédentes, caractérisé en ce qu'on utilise de l'air sous pression pour purger les conduits menant à au moins une des fosses de récolte (29, 30, 31) qui sont positionnées dans le poste de traitement (16, 2, 22) jusqu'au réservoir de traitement en question (18, 4, 7, 8, 9, 10, 24) dans le but de raccourcir la durée de traitement à ce poste de traitement.

9. Procédé selon l'une quelconque des revendications précédentes, caractérisé en ce qu'au moins une des fosses de récolte (29, 30, 31) est munie d'un mécanisme de racloir réalisant une action de raclage vers le bas le long d'au moins une face inférieure de la fosse dans le but de raccourcir la durée du traitement dans le poste de traitement associé.

10. Procédé selon l'une quelconque des revendications précédentes, caractérisé en ce que, en fonction des besoins, le liquide est transféré depuis au moins un réservoir de traitement (18, 4, 7, 8, 9, 10), par exemple au moyen d'un réservoir de travail (19), à un dispositif de séparation (20) destiné à une purification, ledit dispositif de séparation étant par exemple un dispositif centrifuge et/ou un filtre du type à membrane, après quoi, le liquide purifié est alimenté à au moins un réservoir de traitement (18, 4, 7, 8, 9, 10) par exemple au moyen d'un réservoir d'eau propre (21).

11. Procédé selon la revendication 10, caractérisé en ce que les impuretés et les gouttes d'huile sont séparées du liquide de lavage, les détergents n'étant essentiellement pas séparés, mais pouvant être réutilisés.
